# EUROPEAN PATENT APPLICATION

(11) **EP 3 382 213 A1**
(43) Date of publication of application: **03.10.2018**
(21) Application number: 18382162.8
(22) Date of filing: 13.03.2018
(51) Int. Cl.: F16B 12/22

(54) **PANEL ATTACHMENT FITTING**

(30) Priority: 31.03.2017 ES 201700245 U
(71) Applicant: ROYO SPAIN, S.L., 46930 Quart de Poblet (Valencia) (ES)
(72) Inventor: ROYO LOPEZ, Raúl, 46930 Quart de Poblet (Valencia) (ES)
(74) Representative: Temiño Ceniceros, Ignacio

(57) **Abstract**

Panel attachment fitting comprising at least one female part (2) for the interlocking of as many other male parts (1) formed by a rod (10) with a constriction (11) finished with a head (12), and having the particularity that each female part is formed by a body (20) with an outer face where there is arranged a projection (22) with an inner face formed by converging sides, and in the converging part of which it comprises a chase (23) having an inner diameter greater than the outer diameter of the constriction and with an opening having a size adapted to the outer diameter of the constriction and configured for attachment by clipping.

## Description

### TECHNICAL FIELD

The present invention relates to an easy-to-assemble fitting for attaching panels to one another, usually being T- or L-shaped fittings. It is applicable in the furniture industry, ready-to-assemble furniture industry, and in the industry for the production of temporary structures such as stands in fairs, office partitions, etc.

### PRIOR ART

There are several solutions for joining two panels made of wood or other materials such that they are arranged perpendicular to one another. In this joining, a longitudinal panel is attached to a midpoint (T-shaped) or close to an edge (L-shaped) of a transverse panel.

One of the most widely used solutions is the application of wooden dowels in respective blind holes. This joining prevents sliding, but it may become detached by accident. It may therefore be completed with wood glue, rendering it no longer detachable.

A second solution is the so-called dovetail joint that can only be done if the panels are strong enough. It is used for the most part in carpentry.

The possibility of placing a tightening eccentric in one of the panels, and making a hole with a constriction in the other panel, is also known. EP1008767 discloses a variant that is somewhat different than usual.

The application of concealed joints with magnetic elements that are screwed together as a result of a contactless tool is also known but not widely applied due to its cost.

A variant that is relatively similar to the invention uses a dowel with a constriction, whereas the female part of the transverse panel has an inlet hole with a narrow downwards prolongation. The dowel is introduced into the hole and slides until the narrowing coincides with the prolongation. An upward movement must therefore be performed to detach the panels. This solution is only applicable if the transverse panel is very strong, at least in the area of the female part. The shape of the prolongation will be complementary to the dowel, where they may both have notchings, whereby increasing the difficulty in producing same.

The applicant is unaware of any fitting for joining perpendicular panels that has all the features of the invention.

### BRIEF DISCLOSURE OF THE INVENTION

The invention consists of a fitting according to the claims. The different embodiments have a series of advantages such as those described below:
- It allows a detachable but strong joining.
- Both the female part and the male part are integrally attached to their respective panel which can be made of any material (fiberboard, plastics, etc.) since hardly any effort is required for the attachment.
- It is cost-effective and easy to produce.
- The placement of the elements, particularly the distance between female parts, can be extremely accurate according to the embodiment used.
- It does not require tools for assembly.
- It is completely invisible once the assembly of the panels is completed.
- It can be performed without requiring milling, resulting in a simpler and more cost-effective production.

The easy-to-assemble fitting of the invention is of the type designed generally for attaching panels to one another, and comprising at least one female part for the interlocking of as many other male parts. These male parts are formed by a rod with a constriction finished with a head. Furthermore, in a novel manner, each female part of the fitting is formed by a body with an outer face (oriented towards the point where the male part enters) where there is arranged a projection with an inner face formed by converging sides. It comprises at the inner end or converging part a chase having an inner diameter greater than the outer diameter of the constriction, the chase having an opening having a size adapted to the outer diameter of the constriction. It is therefore configured for attachment of the male part in the chase of the female part by clipping.

To prevent the existence of a minor allowance in the attachment, the projection will generally be spaced from the outer face by a distance equivalent to the length of the head, allowing a reduced tolerance.

The assembly will be made even easier if the head has a countersink or chamfering since it will help to self-center the male part if it is misaligned with respect to the female part.

As is known in the art, one of the elements must be slightly flexible for clipping to take place. Generally, the female part will be the slightly flexible one, so it may require an outer edge in the projection (aligned with the side or lateral part of the body) connecting it with the body to assure sufficient rigidity. In that case, an incision may have to be made on the inner face of the outer edge of the projection corresponding with the shape of the head so that the head can readily enter the chase.

To make the interlocking of the female part in the corresponding hole of the panel, beam, or corresponding element easier, its body has ribs on its side surface, on both sides of the projection, preferably forming notches. In that case, it is appropriate to make two opposite depressions on its side surface, one of which may have a projecting longitudinal strip.

The preferred version of the fitting has two or more aligned female parts, arranged such that they are precisely parallel to one another, joined together by a detachable or frangible bridge. They can therefore be located precisely in the same orientation, preventing panel alignment errors.

The rod of each male part may have a series of notchings, similar to the ribs of the body, but with two optional longitudinal grooves on opposite sides.

Polyamide is mentioned as the preferred material for the fitting, but any other resistant material which allows joining by clipping is valid.

### DESCRIPTION OF THE DRAWINGS

The following drawings are included to better understand the invention.
Figure 1 shows a perspective view of a male part of the fitting according to one embodiment.
Figure 2 shows a perspective view of a female part of the fitting according to the preceding example, and a front elevational view thereof.
Figure 3 shows a perspective view of a panel with two examples of the female part of Figure 2.
Figure 4 shows a perspective view of an example of panel with two male parts according to Figure 1.
Figure 5 shows a perspective view of the male part of Figure 1 locked in the female part of Figure 2 in the attachment position.
Figure 6 shows a perspective view of two female parts joined together by a bridge according to one embodiment.

### EMBODIMENTS OF THE INVENTION

An illustrative and non-limiting embodiment of the invention is briefly described below.

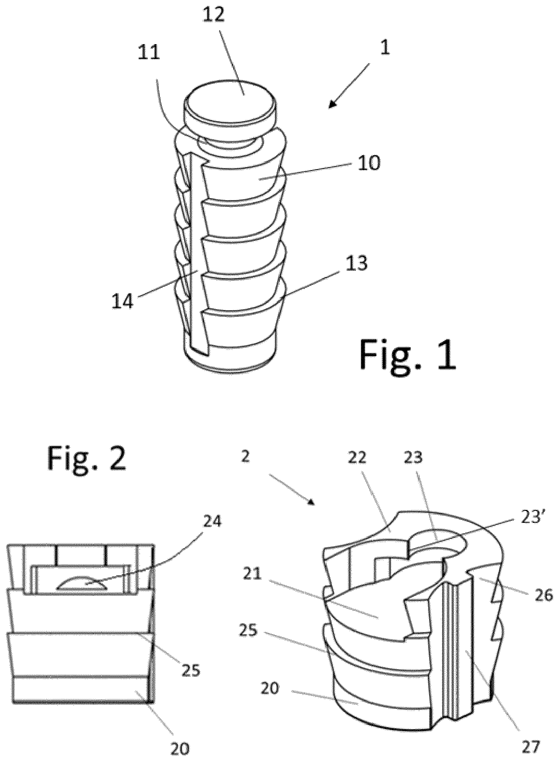

Figures 1 and 2 show the two parts of the fitting of the invention, i.e., a male part (1) and a female part (2).

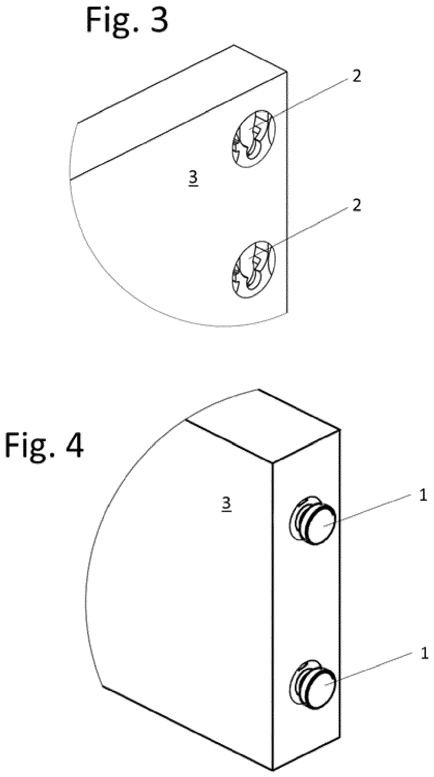

The male part (1) is a rod (10) having a constriction (11) close to one end, leaving a head (12) after the constriction (11). As seen in Figure 1, the rod (10) may have a series of notchings (13) or threads for better attachment to the panel (3) holding it, which will usually be a longitudinal panel, as seen in Figure 4. The rod (10) may have two opposite longitudinal grooves (14). The head (12) will ideally have a slightly countersunk or chamfered, or even conical, front part (on the face opposite the constriction (11)) to make introduction into the female part (2) easier.

The female part (2) comprises a body (20) which will usually have a circular disk shape, although it may have a hexagonal section or another section. In any case, the thickness will depend on the intended use, so it will generally have a reduced thickness since it is usually intended for a larger side of the transverse panel (3), as seen in Figure 3. If the female part (2) is arranged in another type of object, the thickness thereof may be greater.

The body (20) has an outer face (21) where there is arranged a V- or U-shaped projection (22), i.e., having converging inner sides, finished with a chase (23) having an inner diameter that is somewhat greater than the outer diameter of the constriction (11). The chase (23) will have an opening (23') having a size adapted to the diameter of the male part (1) in its constriction (11) so that it is introduced into the chase (23) by clipping. To that end, the material of the parts must be slightly flexible, such as polyamide, for example.

The converging part of the projection (22) is somewhat spaced away from the outer face (21), such that the head (12) can be arranged between the projection (22) and the outer face (21), preferably with little tolerance so that the joining is firmer.

The outer part of the projection (22), i.e., the part that is on the edge of the body (20), can be closed to provide rigidity thereto, as shown in the drawings. In that case, an incision (24) may have to be made on the inner face so that the head (12) can fit.

The side surface of the body (20) can also have a series of ribs (25) that are the same as or different from the notchings (13) of the rod (10) given that they depend on the material of the panels (3) for which they are designed, among other things. They will usually be the same, although they may not be.

As seen in Figure 2, the body (20) may have two depressions (26) on its side, which depressions are symmetrical according to the axis of the projection (22). A longitudinal strip (27) is arranged in one of the two depressions (26). The two depressions (26) and the longitudinal strip (27) allow the placement of the female part (2) in a specific position on a panel (3) in the event that the placement thereof is performed automatically by means of a feeder.

During use, and as seen in Figures 3 and 4, the female part (2) is arranged in a panel (3), beam, or column, generally in a custom-made blind hole so that it is flush therewith, and with the projection (22) pointing towards the lower part. On the other hand, a male part (1) is arranged on the edge of the panel (3) that will be joined, such that only the constriction (11) and the head (12) protrude out.

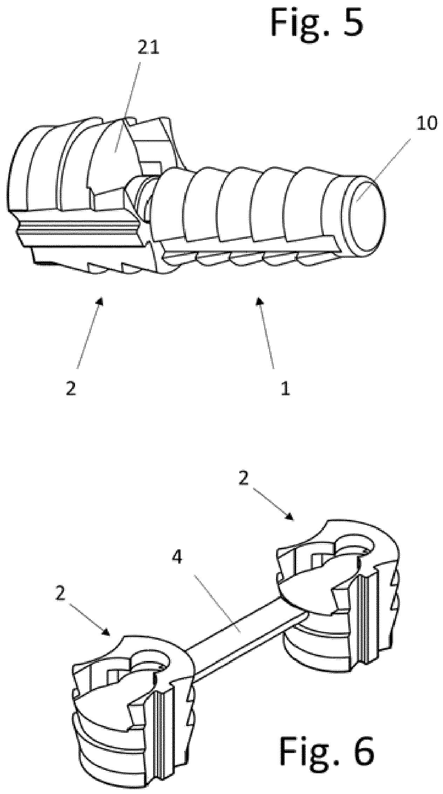

To connect the two elements, the head (12) of the male part (1) is arranged facing the outer face (21) of the female part (2) above the projection (22), and it is moved forward until the head (12) contacts the outer face (21). Relative movement is then performed so that the projection (22) is introduced into the constriction (11), preventing direct removal (Figure 5).

Figure 6 shows a more advanced solution in which the fitting comprises two female parts (2) joined together by a bridge (4) which can be detachable or frangible. The bridge (4) can be a planar strip as depicted. The bridge (4) allows fixing the female parts (2) in an orientation which can be maintained during assembly, but which is broken or detached with the placement in the final location thereof. This thereby assures that the two female parts (2) are arranged precisely parallel, so the introduction of the respective male parts (1) is perfectly identical. This thereby assures that the final position of the two panels (3) is perfectly controlled, without a small placement error of a female part (2) causing a misalignment.

If the chase (23) is on the axis of symmetry of the outer face (21) of the body (20), said misalignment of the panels (3) will not occur. However, poor orientation of a female part (2) may also complicate the insertion of the respective male parts (1).

## Claims

1. Panel attachment fitting for attaching panels (3) comprising at least one female part (2) for the interlocking of as many other male parts (1) formed by a rod (10) with a constriction (11) finished with a head (12), **characterized in that** each female part (2) is formed by a body (20) with an outer face (21) where there is arranged a projection (22) with an inner face formed by converging sides, and in the converging part of which it comprises a chase (23) having an inner diameter greater than the outer diameter of the constriction (11) and with an opening (23') having a size adapted to the outer diameter of the constriction (11) and configured for attachment by clipping.

2. Fitting according to claim 1, wherein the projection (22) is spaced from the outer face (21) by a distance equivalent to the length of the head (12).

3. Fitting according to claim 1, the head (12) of which has a countersink or chamfering.

4. Fitting according to claim 1, the female part (2) of which has a projection (22) with an outer edge connecting it with the body (20).

5. Fitting according to claim 4 having an incision (24) on the inner face of the outer edge of the projection (22) corresponding with the shape of the head (12).

6. Fitting according to claim 1, the body (20) of which has ribs (25) on its side surface.

7. Fitting according to claim 6, the body (20) of which has two opposite depressions (26) on its side surface.

8. Fitting according to claim 7 having a projecting longitudinal strip (27) in one of the depressions (26).

9. Fitting according to claim 1 comprising two female parts (2) in parallel arrangement, joined together by a detachable or frangible bridge (4).

10. Fitting according to claim 1, the rod of which has a series of notchings (13).

11. Fitting according to claim 10, the rod of which has two opposite longitudinal grooves (14).

12. Fitting according to claim 1 being made of polyamide.
